# EUROPEAN PATENT APPLICATION

(11) **EP 2 165 977 A1**
(43) Date of publication of application: **24.03.2010**
(21) Application number: 08016357.9
(22) Date of filing: 17.09.2008
(51) Int. Cl.: C02F 1/28, B01D 17/02, B01J 20/28, B01J 20/30

(54) **Sorption element, sorption medium and a method for providing a sorption medium**

(71) Applicant: C.C. Jensen A/S, 5700 Svendborg (DK)
(72) Inventor: Jensen, Carl Aage, 5700 Svendborg (DK); Grum-Schwensen, Sofus Valdemar, 5700 Svendborg (DK)
(74) Representative: Thierry-Carstensen, Ole Jean

(57) **Abstract**

A sorption element 101 for removing hydrocarbon contaminants from an aqueous liquid , wherein the sorption element 101 comprises a frame structure 102 with at least one opening providing a fluid connection between an input side and an output side of the sorption element 102, each opening being filled with a sorption medium 103, comprising stacked sheets 120, 121, 122 of a sorbent material, the sheets 120, 121, 122 being bonded together by a plurality of mutually interspaced line-shaped joints 130, 131 and/or punctiform joints 130, 131, wherein the sheets 120, 121, 122 of the sorbent material are arranged to extend in the direction from the input side to the output side, thereby forming a plurality of channels 108, each channel being defined by sorbent sheet material and having a feed opening 109 towards the input side and a discharge opening 110 towards the output side. A method for producing a sorption medium comprises: rolling up a first and a second web of a sorbent sheet material onto a spool member and bonding adjacent layers together by line-shaped and/or punctiform joints in one step; cutting open the rolled up material; and flattening out the rolled up material.

## Description

The invention relates to a sorption element for removing hydrocarbon contaminants from an aqueous liquid, a sorption medium and a method for producing a sorption medium.

In many industrial and maritime applications, waste water is produced comprising considerate amounts of hydrocarbon contaminants, such as lubricants, fuel or oil residues. The waste water is typically cleaned using systems of different kinds, for example gravitational oily water separators. The water output from such systems often still contains contaminants at a concentration level not suitable for direct discharge of the water. This is of particular importance for maritime vessels, where oily bilge water is produced that has to be cleaned on board before it may be discharged into the sea in compliance with international environmental regulations, such as the MARPOL-agreement.

Waste water output from an oily water separator is therefore often treated further in filter devices comprising a filter element arranged in a filter housing with an input port and an output port. The waste water is fed to the filter device through the input port, guided through the filter element and discharged through the output port. The aqueous liquid to be cleaned is passed across a filter medium of the filter element. The filter medium holds back oily contaminants as the aqueous liquid passes through the filter medium. Filter elements often have a tendency to clog up long before the capacity for the up-take of contaminants by the filter medium is reached. As a consequence, the filter elements of such devices need to be replaced when the pressure drop across the filter element rises above a critical value long before the filter medium is actually used up. Furthermore, the change in pressure drop during the use of the filter often requires continual adjustments of the cleaning system adding to the systems complexity and/or requiring special attention from qualified staff.

Therefore, there is a need for an improved element for use in systems for removing hydrocarbon contaminants from an aqueous liquid such as bilge water in a maritime vessel or waste water from industrial machinery.

The object of the invention is to provide an element for removing hydrocarbon contaminants from an aqueous liquid, which overcomes the disadvantages of the filter elements mentioned above.

This is achieved by a sorption element according to the invention, wherein the sorption element comprises a frame structure with at least one opening providing a fluid connection between an input side and an output side of the sorption element, each opening being filled with a sorption medium comprising stacked sheets of a sorbent material, the sheets being bonded together by a plurality of mutually interspaced line-shaped joints and/or punctiform joints, wherein the sheets of the sorbent material are arranged to extend in the direction from the input side to the output side, thereby forming a plurality of channels, each channel being defined by sorbent material and having a feed opening towards the input side and a discharge opening towards the output side.

The sorption element is intended to be used in a sorption device comprising a housing with an inlet port, an internal cavity and an output port. The sorption element is arranged inside the cavity of the housing in sealing engagement with the walls of the housing so as to force a fluid flowing from the input port to the output port to pass through the sorption element, wherein the input side of the sorption element is connected to the input port via an input volume, and the output side of the sorption element is connected to the output port via an output volume.

During operation, the liquid flows from the inlet port into the cavity of the housing, filling the input volume that feeds the sorption element. Due to a pressure difference between the input side and the output side, the liquid is driven through the sorption element capturing contaminants in the sorption medium.

The layers of the sorbent sheet material are arranged in the opening of the supporting frame structure, wherein the layers are oriented substantially parallel to the direction of the intended flow.

The channels provide a substantially continuous flow path for a liquid to pass from the input side to the output side, and guide the flow of the liquid along the surface of the sorbent sheet material lining the channels, thereby exposing the liquid to a large surface area of sorbent material. The aqueous liquid is thus treated with the solid sorbent material taking up hydrocarbon contaminants, thereby cleaning the liquid as it passes through the channels of the sorption medium.

It should be noted, that the layers of the sorbent sheet material are tightly packed into the at least one opening of the frame so as to provide as much interaction surface per unit volume as possible and force the fluid flow to pass close to/along the surface of the sorbent sheet material, yet providing an easy passage for the fluid.

Oily contaminants present in the fluid may be captured by adhering to the surface of the sorbent material and/or by coalescing with particles/droplets already captured on the surface of the sorbent sheet material. One important advantage of passing the fluid to be cleaned along the surface of the sorbent sheet material is that the probability of capture by coalescence is strongly enhanced as compared to capture mechanisms relying on passing the fluid across a sheet material, such as in a filter.

The contaminants are retained in the sorption element, while the cleaned liquid is discharged through the discharge openings on the output side. The term "cleaned" refers to a reduction in contaminant concentration of the liquid discharged from the sorption element as compared to the liquid fed to the sorption element.

As mentioned above, the channels formed by the sorbent sheet material of the sorption element are open on both ends and provide a substantially continuous path for the liquid flowing through the sorption element. This has the advantage that the flow resistance of the sorption element according to the invention is substantially less than for known filter type separators relying on liquid flow through the filter and/or sorbent material rather than liquid flow along the surface of the sorbent sheet material.

Furthermore, as explained further below, clogging is avoided, while the probability of the capture of contaminants is increased. The lifetime of the sorption element is thus determined by the capacity of the sorbent material for retaining contaminants rather than by clogging of the sorption element before the sorbent material is used up.

It should also be noted that the change in pressure drop during the lifetime of a sorption element is negligible as compared to the increase of the pressure drop known from the operation of filter type elements. This allows for a less complex and less costly design and dimensioning of a cleaning/purification system using a sorption element according to the invention.

In one embodiment of a sorption element according to the invention, the frame structure has the shape of a hollow cylinder, preferably a right circular hollow cylinder, the cylinder having a first end, a second end opposite the first end, at least one outer face and at least one inner face, the outer and inner faces extending from the first end to the second end.

In the present application, the term cylinder is to be understood as comprising an arbitrary cylinder formed by two essentially identical basal planes having an arbitrary closed contour, wherein the basal planes are arranged substantially parallel to each other and wherein the contours are connected by mutually parallel lines generating the peripheral surface of the cylinder.

As mentioned above, the sorption element is intended to fit inside the housing of a sorption device. The housing may have a cylindrical cavity and may be provided with a first port that, via a first buffer volume, is connected to the outer face of the hollow cylinder-shaped sorption element. The housing may further be provided with a second port that, via a second buffer volume, is connected to the inner face of the hollow cylinder-shaped sorption element. The first and second buffer volumes act as manifolds for distributing the fluid flow over the outer and inner faces of the hollow cylinder-shaped sorption element, respectively.

Further according to another embodiment of a sorption element according to the invention, the outer face of the hollow cylinder faces towards the input side and the inner face of the hollow cylinder faces towards the output side, the channels extending from the outer face to the inner face.

In practice, usually the first port of the above-mentioned sorption device housing is used as the input port and the second port is used as the output port. When operating the sorption device in such a housing, the direction of the fluid flow through the above-mentioned hollow cylinder-shaped sorption element is from the outer face towards the inner face. Thereby providing a larger interaction surface in the upstream part of the fluid flow close to the outer face of the sorption medium, where the contaminant concentration level is higher as compared to the downstream part of the fluid flow close to the inner face of the sorption medium.

Further according to another embodiment of a sorption element according to the invention, the frame structure comprises ring-shaped members in a plane substantially perpendicular to the cylinder axis, the ring-shaped members being supported at a mutual distance from each other by rib-members, thereby defining the openings of the frame structure.

The ring-shaped members may define the shape of the basal plane of the cylindrical sorption element, while the rib-members provide a strengthening of the frame structure and thereby of the sorption element in a direction parallel to the principal axis of the cylinder. This is of particular importance when mounting the sorption element in a cylindrical housing using means for clamping the sorption element in a direction perpendicular to the base plates of the sorption element.

Further according to another embodiment of a sorption element according to the invention, the frame structure is made of a combustible material, such as wood, ply wood, fibre, or fibreboard.

In principle, the frame structure may be made of metal, plastic, or any other material resisting the hydrocarbon-contaminated aqueous liquid. However, advantageously the frame structure may be made of a combustible material that allows for easy disposal of the used sorption element without substantial remainders by burning the sorption element, e.g. in an incinerator of the type available on many maritime vessels. Wood, ply wood, fibre, or fibreboard are examples of frame materials that allow for burning the sorption element after use with low environmental impact.

Further according to another embodiment of a sorption element according to the invention, the sorbent sheet material is an oleophilic and/or hydrophobic material, such as a polypropylene fabric or a polyethylene fabric, thereby allowing for selectively adsorbing/absorbing hydrocarbons rather than water.

Further according to another embodiment of a sorption element according to the invention, a plurality of sorption media is arranged in series, the discharge openings of the channels of a first sorption medium being arranged opposite the feed openings of the channels of a subsequent sorption medium so as to feed liquid discharged from the first sorption medium to the subsequent sorption medium.

The advantage of a series arrangement of sorption media is that the purification/cleaning process may be broken up into several subsequent steps. Between subsequent sorption media, a buffer volume may be provided for redistribution of the fluid discharged from a first step before the fluid is fed to the sorption medium of the subsequent step.

Furthermore, the sorption media may be provided in modules allowing for easy adaption of the size of the sorption element.

It should also be noted that a plurality of sorption elements may also be combined in parallel so as to fill a larger housing.

Further according to another embodiment of a sorption element according to the invention, the subsequent sorption medium is arranged inside the first sorption medium, the outer face of the subsequent sorption medium being located opposite the inner face of the first sorption medium.

Concentric modules may be dimensioned to correspond to different standardised sizes of cylindrical housings, thereby allowing for an easy adaption of the sorption element to the required size / diameter.

According to a further aspect of the invention, a sorption element according to the invention may be used in a system for cleaning bilge water on a maritime vessel.

A system for cleaning bilge water inside the hull of a ship or other maritime vessels may comprise a sorption element according to the invention, the sorption element being arranged in sealing engagement inside a housing having an input port and an output port, so as to provide a fluid connection from the input port of the housing to the output port of the housing only through the sorption medium, and an oily water separator comprising a clean water output port, wherein the clean water output port is connected to the input port of the housing. In such a bilge water system, the clean water output port of the oily water separator may be connected to the input port of the housing via at least one pump, e.g. a centrifugal pump, for transferring liquid from the oily water separator to the housing. A re-circulation line comprising a valve may be provided, the recirculation line connecting the discharge side of the pump to the suction side of the pump.

Passing the aqueous liquid to be cleaned through a mechanical pump has the positive side effect of blending the contaminants and the water, thereby achieving a reduced particulate size of the contaminants in the water. The recirculation line may enhance the blending effect and may smoothen out sudden changes and/or transients in the contaminant concentration.

In a further aspect of the invention, a sorption medium for removing hydrocarbon contaminants from an aqueous liquid is provided, wherein the sorption medium comprises sheets of a sorbent sheet material, the sheets being arranged in juxtaposition to each other so as to form a stack of layers, opposite edges of the stacked sheets defining a first end face of the stack and a second end face of the stack opposite the first end face, wherein adjacent layers are bonded together by a plurality of mutually interspaced line-shaped joints and/or punctiform joints, thereby providing a plurality of channels, each channel being defined by the sorbent sheet material and extending from a feed opening at the first end face to a discharge opening at the second end face.

An aqueous medium to be cleaned may be fed to the sorption medium through the feed openings provided at the first end face, and passed through the channels defined by the sheets of sorbent material, where the contaminants may be captured mainly by the above-mentioned capture mechanisms and retained in the sorption medium. After treatment in the channels of the sorption medium, the cleaned aqueous liquid is finally discharged through the discharge openings at the second end face.

The sheets of the sorption medium guide the flow along the surface of the sorbent material. By bonding adjacent sheets together, it is achieved that the distance between adjacent sheets defining a channel is limited and the fluid flow is kept close to and substantially parallel to the surface of the sorbent sheet medium. Thereby, the probability of capturing contaminants by adherence to the surface of the sheets and/or by coalescence with contaminant particulates/droplets already captured by the surface of the sheets is strongly increased as compared to other flow patterns.

Various bonding patterns of line-shaped joints, punctiform joints or combinations thereof may be contemplated. For example, substantially continuous bonding lines may be provided to form a structure of separate, substantially parallel channels. Alternatively, adjacent sheets may be attached to each other by punctiform joints, thereby forming, between adjacent sheets, a network of open channels confining the fluid flow in directions perpendicular to the sheets while allowing the fluid flow to pass essentially freely in directions parallel to the plane of the sheets.

As mentioned above, the open channels formed by the sorbent sheet material of the sorption element provide a substantially continuous path for the liquid flowing through the sorption element. This has the advantage that the flow resistance of the sorption element according to the invention is substantially less than for known separators of the filter type relying on liquid flow through a filter membrane or other filter material rather than along the surface of the sheet material.

Furthermore, clogging is avoided, since contaminants retained in the sorbent material do not obstruct the flow path of the liquid passing through the sorption element according to the invention in the same way as in a filter element. In fact, clogging is avoided, while the probability of the capture of contaminants is increased. Even though the probability of the flow to hit a contaminant particulate captured by the surface of the sorbent sheet material is enhanced when the flow is directed along the surface of the sheet, the flow is not blocked by such obstacle, but merely deviated. Due to coalescence interaction, the obstacle in form of a contaminant particulate may capture contaminants from the aqueous liquid while the flow of the aqueous liquid deviates easily around the obstacle. The lifetime of the sorption element is thus determined by the capacity of the sorbent material for retaining contaminants rather than by clogging of the sorption element before the sorbent material is used up.

A sorption medium according to the invention may be arranged in the at least one opening of a frame structure, thereby forming a sorption element according to the invention. Afternatively, the sorption medium may also be arranged without a supporting frame structure directly inside a duct to fill out the opening of the duct, wherein the channels of the sorption medium are aligned substantially parallel to the principal axis of the duct to provide a fluid passage through the sorption medium from an input end of the duct to an output end of the duct. Thereby, a sorption device module for removing hydrocarbon contaminants from an aqueous liquid flowing through the duct may be provided.

Further according to another embodiment of a sorption medium according to the invention, the joints are arranged along bonding lines extending from the first end face to the second end face, wherein bonding lines between subsequent pairs of sheets are displaced in a direction transversely to the bonding lines.

Thereby, a cellular structure of substantially parallel channels is formed. The cellular structure provides fluid passages through the sorption medium guiding the fluid flow parallel to and along the surface of the sheets. By displacing the bonding lines with respect to each other in a transverse direction, an expandable structure of adjacent channels is achieved, yet limiting the cross-sectional area of the channels in order to avoid that a large opening in the sorption medium may be formed spontaneously, thus allowing contaminated fluid to bypass the sorbent sheet material and thus leak through the sorption medium.

The cellular structure ensures an even distribution of the sheets of sorbent material throughout the cross-section of the opening of the frame structure or duct filled by the sorption medium also under operational conditions.

Further according to another embodiment of a sorption medium according to the invention, the bonding lines are arranged with an essentially constant mutual interspacing.

Thereby, similar channels are formed, the channels having a similar cross-section with an essentially regular polygonal cross-section. This has the advantage that the flow resistance per cross-sectional unit area of the sorption medium is essentially uniform across the sorption medium.

Further according to another embodiment of a sorption medium according to the invention, the bonding lines between subsequent pairs of sheets are displaced transversely with respect to each other by essentially half the mutual interspacing. Thereby, a regular rhombic channel cross-section is achieved.

In a further aspect of the invention, a method for producing a sorption medium for the separation of hydrocarbon contaminants from an aqueous liquid is provided, the method comprising the steps of:
- rolling up a plurality of windings of a first web of flexible sorbent sheet material together with at least one second web of flexible sorbent sheet material onto a spool member, thereby forming a roll of flexible sorbent sheet material,
- while rolling up the first and second webs, bonding adjacent faces of the webs together by a plurality of mutually interspaced line-shaped and/or punctiform joints, the joints being arranged along bonding lines, the bonding lines between subsequent pairs of layers being displaced with respect to each other in a direction transverse to the bonding lines,
- cutting the roll open along a radial plane parallel to the winding axis of the roll, and
- flattening out the rolled up material so as to form a stack of sheets of sorbent sheet material in juxtaposition to each other, opposite edges of the sheets defining a first end face and a second end face opposite the first end face, wherein subsequent sheets are bonded together by the joints so as to provide channels, each of the channels extending from a feed opening at the first end face to a discharge opening at the second end face.

Thereby, a method is provided for producing a stratified sorption medium according to the invention from a sorbent sheet material where subsequent layers within the sorption medium are bonded together so as to form an arrangement of closely packed channels, wherein the sorption medium is expandable in the stacking direction.

Using a spooling type machine according to the claimed method has the advantage that a sorption medium may be produced rapidly and at low cost in a single spooling step only followed by the simple steps for removing the rolled-up material from the spooling set-up, cutting open the roll and flattening out the material.

By bonding adjacent sheets together, it is achieved that the distance between adjacent sheets defining a channel is limited and the fluid flow is kept close to and substantially parallel along the surface of the sorbent sheet. Where the bonding lines are substantially continuous lines, a structure of separate, substantially parallel channels is formed.

Alternatively, adjacent sheets may be attached to each other by punctiform joints, thereby forming a network of channels allowing the fluid flow to move essentially freely in directions parallel to the plane of the sheets, while the fluid flow in directions perpendicular thereto is confined between adjacent sheets.

Further according to another embodiment, the method for producing a sorption medium comprises the further steps of:
- subdividing the stack into sub-stacks by cutting the stack substantially perpendicular and/or substantially parallel to the channels,
- stacking and bonding together a plurality of sub-stacks on top of each other with the channels of the sub-stacks arranged substantially parallel to each other thereby forming a block with channels extending from a first end face of the block to a second end face of the block.

By cutting and stacking, the sorption medium may easily be adapted to suitable shapes of different openings, in particular when producing high stacks with a short channel length.

Further according to another embodiment of a method for producing a sorption medium according to the invention, the sorbent sheet material is an oleophilic and/or hydrophobic material, such as a polypropylene fabric or a polyethylene fabric, so as to selectively capture and retain oily contaminants from the aqueous liquid.

The invention is explained in detail below with reference to the drawings. The drawings show schematically in
Fig. 1 a side view of one embodiment of a sorption element,
Fig. 2 a cross-sectional view of the sorption element of Fig. 1, the cross-section being taken along line II-II in Fig. 1,
Fig. 3 a side view of a further embodiment of a sorption element,
Fig. 4 a cross-sectional view of the sorption element of Fig. 3, the cross-section being taken along line IV-IV in Fig. 3,
Fig. 5 a cross-sectional view of a sorption medium formed by a stack of sorbent sheet material interconnected by bonding lines, the cross-section being taken in a plane perpendicular to the bonding lines,
Fig. 6 an arrangement for rolling two webs of sorbent sheet material together onto a spool member while applying a bonding agent, and
Fig. 7 a system for cleaning bilge water inside the hull of a ship using a sorption element according to the invention.

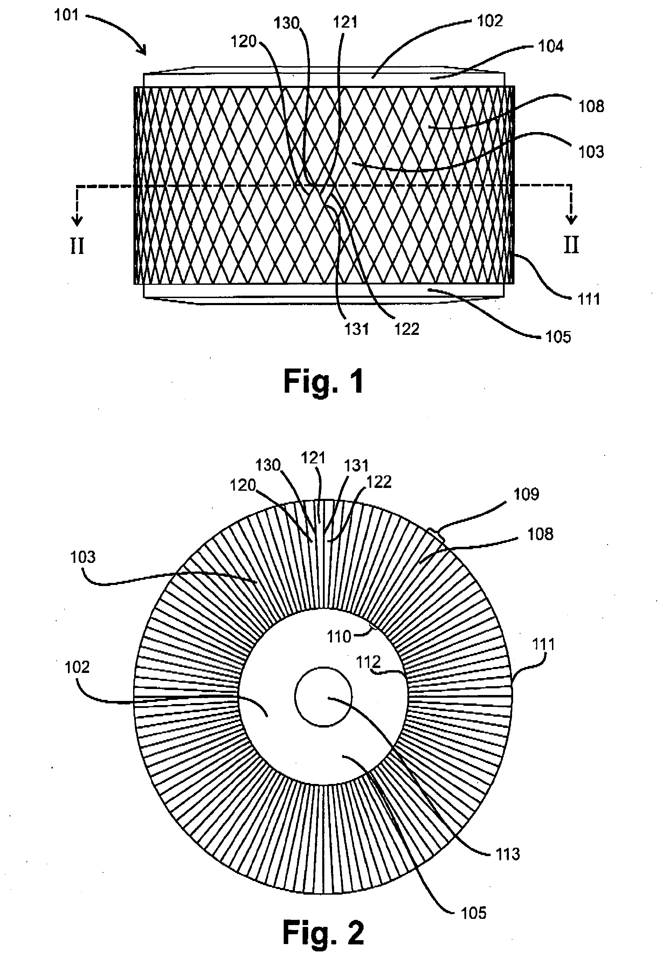

Fig. 1 shows a side view of a first embodiment of a sorption element 101 according to the invention. The sorption element 101 comprises a frame structure 102 and a sorption medium 103. The frame structure comprises at least a first base plate 104 and a second base plate 105 arranged parallel with respect to each other at a mutual distance leaving an opening at a circumferential outer surface of the cylinder defined by the base plates 104, 105.

The opening of the frame structure is filled with the sorption medium 103 comprising sheets 106a, 106b of a sorbent sheet material, the sheets 106a, 106b extending in an axial direction from the first base plate 104 to the second base plate 105 and in a radial direction from the circumferential opening towards the inner side of the cylinder.

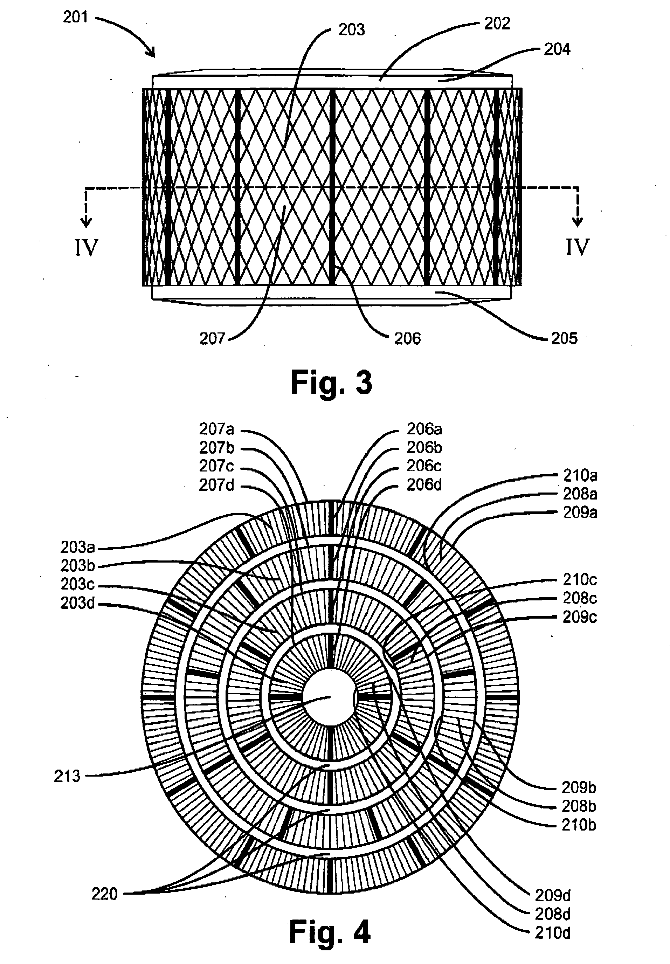

It should be noted that in Fig. 1 and Fig. 2, as well as in Fig. 3 and Fig. 4, the filling of the frame structure openings with a sorption medium is only indicated schematically. In practice, the sheets of the sorption medium are densely packed. The number of sheets per unit volume is determined by balancing the goal of providing a large interaction surface against the goal of providing a fluid connection with a low flow resistance.

The frame structure 102 may comprise a hollow central pole (not shown) connecting the base plates 104, 105 to strengthen the frame 102, wherein the sheets of the sorption medium 103 are arranged radially around the hollow central pole. The wall of the central pole comprises openings in order to allow fluid to pass through the walls of the pole.

Alternatively, a sorption medium 103 may be provided using a material which is sufficiently stiff with respect to deformation in the direction perpendicular to the base plates 104, 105 in order to form a self-supporting sorption medium 103.

Base plates 104, 105 may e.g. be glued to the sorption medium 103 or directly moulded.together with the sorption medium 103, thereby achieving a sealing attachment of the base plates 104, 105 to the sorption medium 103.

Adjacent sheets 106a, 106b are bonded together along substantially radial bonding lines 107a, 107b, wherein bonding lines 107a between one pair of adjacent sheets 106a, 106b and bonding lines 107b between a subsequent pair of sheets 106b, 106c are displaced with respect to each other in a direction transverse to the bonding lines 107a, 107b. Thereby, a network of sorbent sheet material is formed defining channels 108 extending in a radial direction.

Fig. 2 shows a projection of a cross-section of the sorption element of Fig. 1 along line II-II in Fig. 1. The sorption medium 102 is arranged to form a hollow cylinder, wherein the channels 108 of the sorption medium 102 extend radially inwards from a feed opening 109 at the circumferential outer surface 111 to a discharge opening 110 at the inner surface 112. The cross-sectional shape of the sorption element 101 may be defined by the shape of the frame structure 102, which in the present case is circular as defined by the circular shape of the base plates 104, 105. Other cross-sectional shapes with an arbitrary contour, such as defined by any closed curved line or a closed polygon may be contemplated.

In practice, the actual shape of the sorption element may often be determined by the shape of the housing in which the sorption element will be arranged, when in use. For example, if the sorption element 101 is to replace a quite common filter element for standard circular housings, such as housings HDU 15/15, HDU 20/38, or HDU 27/27, all available from C.C. Jensen A/S, Denmark, advantageously, the sorption element 101 has a circular cross-section and dimensions compatible with such a standard housing.

At least one of the base plates 104, 105 is provided with a central opening 113. Thereby, a fluid pathway through the sorption element is provided from the opening at the circumferential outer surface 111 through the channels 108 of the sorption medium 103 and through the central opening 113. The sorption element may in principle be operated in both flow directions. In practice, however, the circumferential outer surface is often used as fluid input and the inner surface 112 and the opening 113 as fluid output of the sorption element. The fluid flow of an aqueous liquid to be cleaned in the sorption element thus enters the sorption element 101 at the feed openings 109 of the channels 108 of the sorption medium 103, passes along the surface of the sorbent sheet material defining the channels 108, leaves the sorption medium 103 at the discharge openings 110 of the channels 108, and leaves the sorption element 101 through the opening 113.

The sorbent material of the sorption medium 103 comprises an oleophilic and/or hydrophobic material, such as a polypropylene fabric or a polyethylene fabric. On the way through the sorption medium 103, the concentration of hydrocarbon contaminants, such as oil, fuel, or the like, is substantially removed from the aqueous liquid by sorption interaction binding the oily contaminants to the sorbent material and leaving the increasingly purified water to flow on.

Fig. 3 and Fig. 4 show a further embodiment of a sorption element 201 according to the invention, respectively in a side projection and in cross-section along line IV-IV in Fig. 3. The sorption element 201 of Fig. 3 and Fig. 4 comprises a frame structure 202 forming a hollow cylinder with parallel base plates 204, 205 arranged at a mutual distance from each other and connected by rib members 206 extending between the base plates 204, 205.

The base plates 204, 205 and the rib members 206 define openings 207 for fluid communication between the circumferential outer surface and the inner surface of the hollow cylinder. The openings 207 are filled with a sorption medium 203 of layered sheet material, the sorption medium comprising radial channels 208 as explained above with reference to Fig. 1 and Fig. 2.

The base plates may comprise concentric members 204a-d, 205a-d, connected by corresponding rib members 206a-d, the concentric members and the rib members defining openings 207a-d, each opening 207a-d being filled with a sorption medium 203a-d. Thereby, the sorption media 203a-d are arranged in series, wherein the discharge openings 210a, 210b, 210c of the channels 208a, 208b, 208c of a first sorption medium 203a, 203b, 203c are arranged opposite the feed openings 209b, 209c, 209d of the channels 208b, 208c, 208d of a subsequent sorption medium 203b, 203c, 203d, so as to feed liquid discharged from the first sorption medium 203a, 203b, 203c to the subsequent sorption medium 203b, 203c, 203d, respectively.

As explained above, a fluid path is provided for the aqueous liquid to flow through the openings 207 in the circumferential outer surface of the hollow cylinder through the sorption medium 203, and through the at least one opening 213. Flowing along that fluid path, the aqueous liquid is cleaned by interaction with the oleophilic and/or hydrophobic sorbent sheet material, such as adsorption or absorption, when flowing through the channels 208 of the sorption medium 203.

Advantageously, a small spacing 220 may be provided at the transition between sorption media 203a-d as a buffer volume acting as manifold in order to equally distribute the fluid flow from the discharge openings 210a-c of a first sorption medium 203a-c to the feed openings 209b-d of the respective subsequent sorption medium 203b-d.

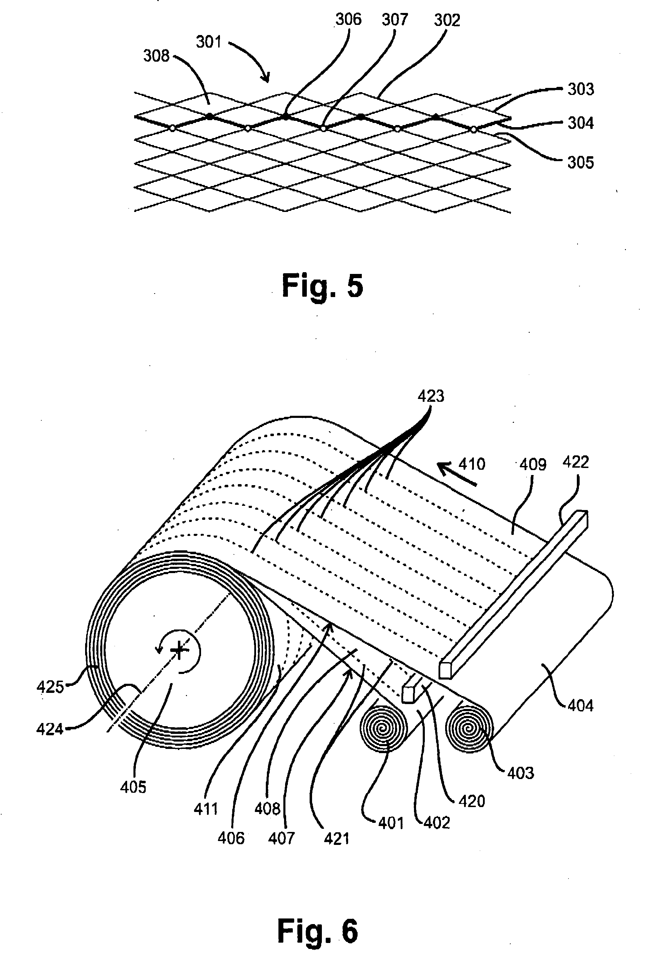

A cross-sectional view of one embodiment of a sorption medium 301 according to the invention is shown in Fig. 5. The sorption medium comprises a stack of sheets 302-305 of sorbent, preferably oleophilic and/or hydrophobic material. The cross-section is taken in a plane perpendicular to the sheets of the stack. A single sheet 303 of sorbent material is emphasised (thick line) to illustrate the orientation of the sheets in the stack of layers. Adjacent sheets are attached to each other by joints. The joints may be formed as line-shaped joints and/or punctiform joints arranged so as to form a network of vertically interconnected sheets, where the vertical direction is substantially perpendicular to the plane of the sheets. The joints between subsequent pairs of sheets, are displaced with respect to each other in a direction parallel to the plane of the sheets so as to form an expandable stratified sorption medium with channels, the channels being defined by the interconnected sheets of sorbent material and providing a fluid pathway along the surface of the sorbent material. In the embodiment of Fig. 5, the joints are bonding lines 306, 307 arranged with an essentially constant mutual distance from each other, in the drawing extending perpendicular to the drawing plane. The bonding lines 306 (dots) on one side of a given sheet 304 in the stack are displaced with respect to the bonding lines 307 (circles) on the opposite side of the sheet 304 by half the mutual distance between the lines in a direction perpendicular to the bonding lines 306, 307 and in the plane of the sheet 304. Thereby a cellular structure of essentially parallel channels 308 is formed, the channels shown in the drawing having a quadrilateral, more specifically a rhombic cross-section, and extending perpendicular to the drawing plane.

Other arrangements of the joints in a network of vertically interconnected sheets may be contemplated in order to form an expandable stratified sorption medium, for example a substantially periodic arrangement of punctiform joints with a rectangular unit cell, each of the corners of the unit cell being defined by a punctiform joint, wherein the corner points of each unit cell on one side of a given sheet are located in the centre of corresponding unit cells on the opposite side of the sheet. The fluid path provided through such a sorption medium is thus defined by the sheets with an open network of channels between adjacent sheets.

Fig. 6 shows an arrangement for use in a method according to the invention for producing a sorption medium. Sorbent sheet material is provided from at least one supply roll 401 with a first web 402 of sorbent sheet material and one roll 403 with a second web 404 of sorbent sheet material. The first and second webs 402, 404 are spooled together onto a common spool member 405, wherein each layer of web 402, 404 on the spool member 405 has an inward surface 406, 407 facing towards the spool axis 424 and an outward surface 408, 409 facing away from the spool axis 424.

While rolling up the first and second webs 402, 404 together onto the spool member 405, glue is applied to the moving web 402, 404 on the section from the supply roll 401, 403 to the spool member 424, so as to form bonding lines substantially parallel to the direction of the movement of the web 402, 404.

In order to interconnect all of the layers of roll 425 on the spool member 405 with each other, bonding lines need to be formed between all adjacent layers of sorbent sheet material spooled onto the spool member 405. Therefore, the outward surface 408 of the first web is bonded to the inward surface 407 of the second web of the same spooling turn and the inward surface 406 of the first web is bonded to the outward surface 411 of the second web of the previous spooling turn.

This interconnection of all layers may be achieved by applying glue to the respective outward surfaces 408, 409 of both the first web 402 and the second web 404, as shown in Fig. 6. Alternatively, the glue may be applied to the inward surfaces 406, 407 of both the first web 402 and the second web 404, or to the outward and inward surfaces 406, 408 of the first web 402, or to the outward and inward surfaces 407, 409 of the second web 404.

In the arrangement of Fig. 6, glue is provided through a plurality of nozzles distributed over the width of the webs, wherein a first set of nozzles 420 provides glue for a first set of bonding lines 421 on the outward surface 408 of the first web 402, and a second set of nozzles 422 provides glue for a second set of bonding lines 423 on the outward surface 409 of the second web 404. The first set of nozzles 420 is, with respect to the second set of nozzles 422, displaced in a direction transverse to the direction of the movement of the webs (indicated by arrow 410), thereby forming the first and the second set of bonding lines 421, 423 such that they are displaced with respect to each other in a direction transverse to the bonding lines 421, 423.

It should be noted, that alternative ways to form bonds between adjacent layers instead of gluing may be contemplated, such as thermal processing, laser processing or ultrasonic processing.

In order to produce a stack of sheets of sorbent sheet material, the roll 425 of interconnected webs 402, 404 may be cut open along a radial plane parallel to the spool-axis, removed from the spool member 405 and flattened out. The stack of sheets thus produced may then be cut into smaller sub-stacks by cutting across the stack, e.g. substantially perpendicular to the bonding lines and/or substantially parallel to the bonding lines. A block may be formed by stacking and bonding together the sub-stacks on top of each other, wherein the channels of the sub-stacks are aligned essentially parallel to each other. The interconnected sheets of the stack, sub-stacks or block of sheets form a stratified sorption medium with interconnected layers defining channels for passing a fluid through the sorption medium, wherein the fluid is guided essentially parallel and close to the surface of the sorbent sheet material forming the layers.

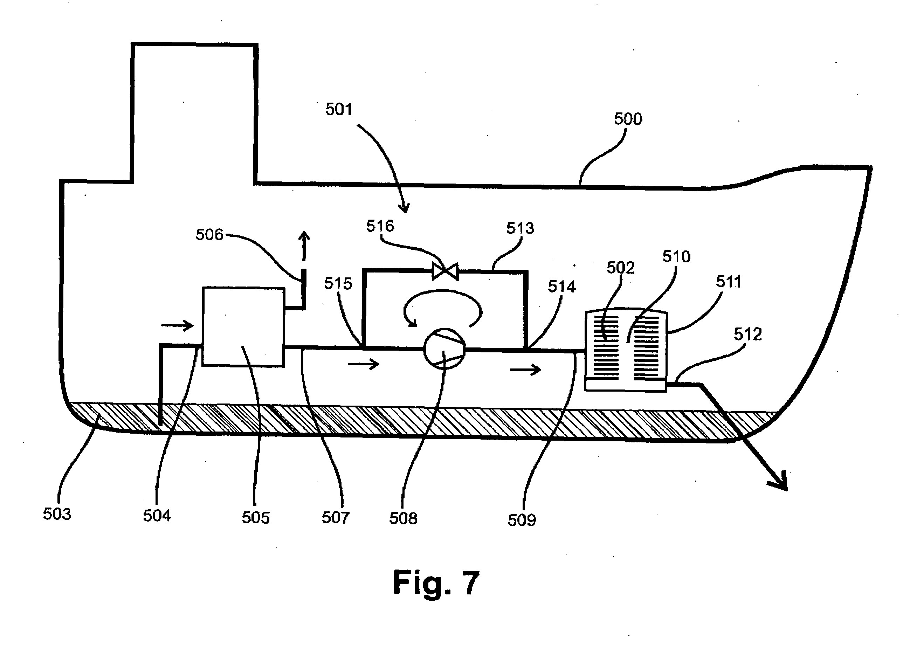

Advantageously, a sorption element according to the invention may be used in a system for cleaning the bilge water inside the hull of a ship 500 or other maritime vessels. Fig. 7 shows schematically one embodiment of a bilge water cleaning system 501 using a sorption element 502 according to the invention. Bilge water 503 comprising oily contaminants is transferred through an input port 504 into an oily water separator 505 of a common type, such as a gravitational oily water separator. The oily water separator 505 may have a sludge output port 506 for transferring the sludge of concentrated oily contaminants into an oil waste tank (not shown).

By the action of the oily water separator 505 the concentration of the oily contaminants in the water is reduced, thereby producing clean water that may be removed from the oily water separator 505 through a clean water output port 507. The water output from the oily water separator 505 still contains oily contaminants at a concentration level well above what is legal for legal discharge of waste water in compliance with international environmental regulations. The aqueous liquid output through the clean water output port 507 of the oily water separator 505 is therefore transferred to a second cleaning stage.

The second cleaning stage comprises a pump 508 feeding the aqueous liquid to an input port 509 of a sorption device 510. The sorption device 510 comprises a housing 511 in which a sorption element 502 is arranged in sealing engagement with inner walls of the housing 511 so as to provide a fluid pathway from the input port 509 of the sorption device housing 511 to an output port 512 of the sorption device housing 511 only through a sorption medium of the sorption element 502. As the aqueous liquid passes through the sorption medium, oily contaminants are held back by the, preferably oleophilic and/or hydrophobic, sorption medium, while the water easily passes through the sorption medium to the output port 512 of the sorption device. Using a sorption element 502 according to the invention, it has been shown in practice that an oily contaminant concentration of below 5ppm may be achieved for the water output from the sorption device. The water released through the output port of the second stage of the bilge water cleaning system may therefore be discharged over board in compliance with environmental regulations for the discharge of waste water at sea.

Advantageously, the second cleaning stage of the above bilge water system 501 further comprises a recirculation line 513, preferably provided with a valve 516, the recirculation line 513 connecting the discharge side of the pump 508 back to the suction side of the pump 508. At the discharge side branching point 514, part of the liquid discharged from the pump 508 is branched off into the return line 513 rather than being transferred to the sorption device. Due to the pressure difference between the discharge side and the suction side, the branched-off part of the liquid is driven to the suction side branching point 515, where it is mixed with liquid coming from the oily water separator 505, and fed back into the pump 508. By this arrangement, detrimental effects of a sudden rise or transients in the concentration of contaminants, e.g. due to a "plug" of oil being accidentally released from the oily water separator and transferred to the second cleaning stage, may be mitigated.

### List of reference numbers

- 101: sorption element
- 102: frame structure
- 103: sorption medium
- 104, 105: base plate
- 108: channel
- 109, 110: opening
- 111: outer surface
- 112: inner surface
- 113: opening
- 120, 121, 122: sheet
- 130, 131: bonding lines

- 201: sorption element
- 202: frame structure
- 203, 203a-d: sorption medium
- 204, 205: base plate
- 206, 206a-d: rib
- 207, 207a-d: opening
- 208, 208a-d: channel
- 209, 209a-d: opening
- 210, 210a-d: opening
- 213: opening
- 220: spacing

- 301: sorption medium
- 302, 303, 304, 305: sheets
- 306, 307: bonding lines
- 308: channel

- 401: first roll
- 402: first web
- 403: second roll
- 404: second web
- 405: spool member
- 406, 407: inward surface
- 408, 409, 411: outward surface
- 410: direction of movement
- 420,422: nozzle set
- 421,423: bonding lines
- 424: spool axis

- 500: ship
- 501: bilge water cleaning system
- 502: sorption element
- 503: bilge water
- 504: input port
- 505: oily water separator
- 506: sludge output port
- 507: clean water output port
- 508: pump
- 509: input port
- 510: sorption device
- 511: housing
- 512: output port
- 513: recirculation line
- 514,515: branching point
- 516: valve

## Claims

1. Sorption element (101) for removing hydrocarbon contaminants from an aqueous liquid, the sorption element (101) comprising a frame structure (102) with at least one opening providing a fluid connection between an input side and an output side of the sorption element (102), each opening being filled with a sorption medium (103), comprising stacked sheets (120, 121, 122) of a sorbent material, the sheets (120, 121, 122) being bonded together by a plurality of mutually interspaced line-shaped joints (130, 131) and/or punctiform joints (130, 131), wherein the sheets (120, 121, 122) of the sorbent material are arranged to extend in the direction from the input side to the output side, thereby forming a plurality of channels (108), each channel being defined by sorbent sheet material and having a feed opening (109) towards the input side and a discharge opening (110) towards the output side.

2. Sorption element according to claim 1, wherein the frame structure (102) has the shape of a hollow cylinder, preferably a right circular hollow cylinder, the cylinder having a first end (104), a second end (105) opposite the first end (104), at least one outer face (111) and at least one inner face (112), the outer and inner faces (111, 112) extending from the first end (104) to the second end (105).

3. Sorption element according to claim 2, wherein the outer face (111) of the hollow cylinder faces towards the input side and the inner face (112) of the hollow cylinder faces towards the output side, the channels extending from the outer face (111) to the inner face (112).

4. Sorption element according to claim 2 or claim 3, wherein the frame structure (202) comprises ring-shaped members (204, 205) in a plane substantially perpendicular to the cylinder axis, the ring-shaped members (204, 205) being supported at a mutual distance from each other by rib-members (206), thereby defining the openings (207) of the frame structure (202).

5. Sorption element according to any of the preceding claims, wherein the frame structure (102, 202) is made of a combustible material, such as wood, ply wood, fibre, or fibreboard.

6. Sorption element according to any of the preceding claims, wherein the sorbent sheet material is an oleophilic and/or hydrophobic material.

7. Sorption element according to any of the preceding claims, wherein a plurality of sorption media (203a-d) is arranged in series, the discharge openings (210a-c) of the channels (208a-c) of a first sorption medium (203a-c) being arranged opposite the feed openings (209b-d) of the channels (208b-d) of a subsequent sorption medium (203b-d) so as to feed liquid discharged from the first sorption medium (203a-c) to the subsequent sorption medium (203b-d).

8. Sorption element according to claim 7 and any of the claims 2-6, wherein the subsequent sorption medium (203b-d) is arranged inside the first sorption medium (203a-c), the outer face of the subsequent sorption medium (203b-d) being located opposite the inner face of the first sorption medium (203a-c).

9. Sorption medium (301) for removing hydrocarbon contaminants from an aqueous liquid, the sorption medium comprising sheets (302, 303, 304, 305) of a sorbent sheet material, the sheets (302, 303, 304, 305) being arranged in juxtaposition to each other so as to form a stack of layers, opposite edges of the stacked sheets defining a first end face of the stack and a second end face of the stack opposite the first end face, wherein adjacent layers are bonded together by a plurality of mutually interspaced line-shaped joints and/or punctiform joints, thereby providing a plurality of channels (308), each channel being defined by the sorbent sheet material and extending from a feed opening at the first end face to a discharge opening at the second end face.

10. Sorption medium according to claim 9, wherein the joints are arranged along bonding lines (306, 307) extending from the first end face to the second end face, wherein bonding lines (306, 307) between subsequent pairs of sheets (303/304), (304/305) are displaced in a direction transversely to the bonding lines (306, 307).

11. Sorption medium according to claim 10 wherein the bonding lines (306, 307) are arranged with an essentially constant mutual interspacing.

12. Sorption medium according to claim 11, wherein the bonding fines (306, 307) between subsequent pairs of sheets (303/304, 304/305) are displaced transversely with respect to each other by essentially half the mutual interspacing.

13. Method for producing a sorption medium for the separation of hydrocarbon contaminants from an aqueous liquid, the method comprising the steps of:
- rolling up a plurality of windings of a first web (402) of flexible sorbent sheet material together with at least one second web (404) of flexible sorbent sheet material onto a spool member (405), thereby forming a roll (425) of flexible sorbent sheet material,
- while rolling up the first and second webs (402, 404), bonding adjacent faces (406/408, 407/411) of the webs (402, 404) together by a plurality of mutually interspaced line-shaped and/or punctiform joints, the joints being arranged along bonding lines (421, 423), the bonding lines (421, 423) between subsequent pairs of layers being displaced with respect to each other in a direction transverse to the bonding lines (421, 423),
- cutting the roll open along a radial plane parallel to the winding axis (424) of the roll (425), and
- flattening out the rolled up material so as to form a stack of sheets of sorbent sheet material in juxtaposition to each other, opposite edges of the sheets defining a first end face and a second end face opposite the first end face, wherein subsequent sheets are bonded together by the joints so as to provide channels, each of the channels extending from a feed opening at the first end face to a discharge opening at the second end face.

14. Method according to claim 13, the method comprising the further steps of:
- subdividing the stack into sub-stacks by cutting the stack substantially perpendicular and/or substantially parallel to the channels
- stacking and bonding together a plurality of sub-stacks on top of each other with the channels of the sub-stacks arranged substantially parallel to each other thereby forming a block with channels extending from a first end face of the block to a second end face of the block.

15. Method according to any of the claims 13-14, wherein the sorbent sheet material is an oleophilic and/or hydrophobic material.
